# EUROPEAN PATENT SPECIFICATION

(11) **EP 2 115 321 B1**
(45) Date of publication and mention of the grant of the patent: **03.11.2010**
(21) Application number: 07867895.0
(22) Date of filing: 20.12.2007
(51) Int. Cl.: F16H 7/12, F16H 7/14

(54) **TENSIONER AND INSTALLATION ASSEMBLY**
SPANNER UND EINBAUANORDNUNG
TENSIONNEUR ET ENSEMBLE D'INSTALLATION

(30) Priority: 22.01.2007 US 656153
(43) Date of publication of application: 11.11.2009
(73) Proprietor: The Gates Corporation, Denver, CO 80202 (US)
(72) Inventor: SCHEVER, Holger, 52224 Stolberg (DE)
(74) Representative: Tunstall, Christopher Stephen
(86) International application number: PCT/US2007/026089
(87) International publication number: WO 2008/091334

(56) References cited:
- WO-A-2006/053432
- WO-A-2006/076799
- US-A- 5 919 107

## Description

### Field of the Invention

The invention relates to a tensioner, and more particularly, to a tensioner and installation assembly having a base fixedly connected to an installation and retaining element.

### Background of the Invention

Tensioners are used to apply a preload to a belt drive system. A preload assures proper non-slip engagement of the belt with a driving pulley and various driven pulleys.

To facilitate installation of a tensioner on an engine means are known to allow adjustment. The tensioner comprises a base, pivot arm and spring for biasing the pivot arm. The tensioner is fastened to a mounting surface. Adjustment means generally include means to connect a tool to a shaft. The tool connection and shaft then rotate to adjust the pivot arm position thereby loading a belt. The shaft is rotated with respect to a base. The base remains in a fixed position with respect to a mounting surface.

Representative of the art is U.S. patent no. 6,464,604 (2002) to Frankowski which discloses a tensioner for tensioning engine driven driving elements, such as belts or chains, is disclosed. In accordance with one aspect of the invention, the tensioner is initially installed with the pivot structure spaced past the perpendicular angular position thereof. In accordance with another aspect of the invention, the tension required to move the pivot structure to the end of its range of angular positions is at least 75% more than at the hot engine angular position thereof. In accordance with another aspect of the invention, the tensioner has a stop at the maximum travel position thereof and the tension required to move the pivot structure to its maximum travel position is at least 75% more than at the hot engine angular position thereof. In accordance with a still further aspect of the invention; the tension required to move the pivot structure to a potential tooth skip angular position is greater than the maximum tension the engine is capable of creating.

WO 2006/076799 A1 discloses a tensioner according to the preamble of claim 1. What is needed is a tensioner having an installation assembly comprising a base fixedly connected to an installation and retaining element. The present invention meets this need.

### Summary of the Invention

The primary aspect of the invention is to provide a tensioner having an installation assembly comprising a base fixedly connected to an installation and retaining element.

Other aspects of the invention will be pointed out or made obvious by the following description of the invention and the accompanying drawings.

In particular the invention comprises a tensioner as recited in the claims. base and a second hole (91) in the retaining member aligned with an axis (B-B), the first hole and second hole and bore cooperatively engaging a fastener (110), the axis (B-B) offset a predetermined distance from axis (A-A), the axis (C-C) offset a predetermined distance from axis (A-A), a tool receiver (92) in the retaining member, and the base, shaft and retaining member fixedly connected together such that there may be no relative movement between the base, shaft and retaining member during installation.

### Brief Description of the Drawings

The accompanying drawings, which are incorporated in and form a part of the specification, illustrate preferred embodiments of the present invention, and together with a description, serve to explain the principles of the invention.
Fig. 1 is an exploded view of a tensioner and installation assembly.
Fig. 2 is a detail of the installation assembly.

### Detailed Description of the Preferred Embodiment

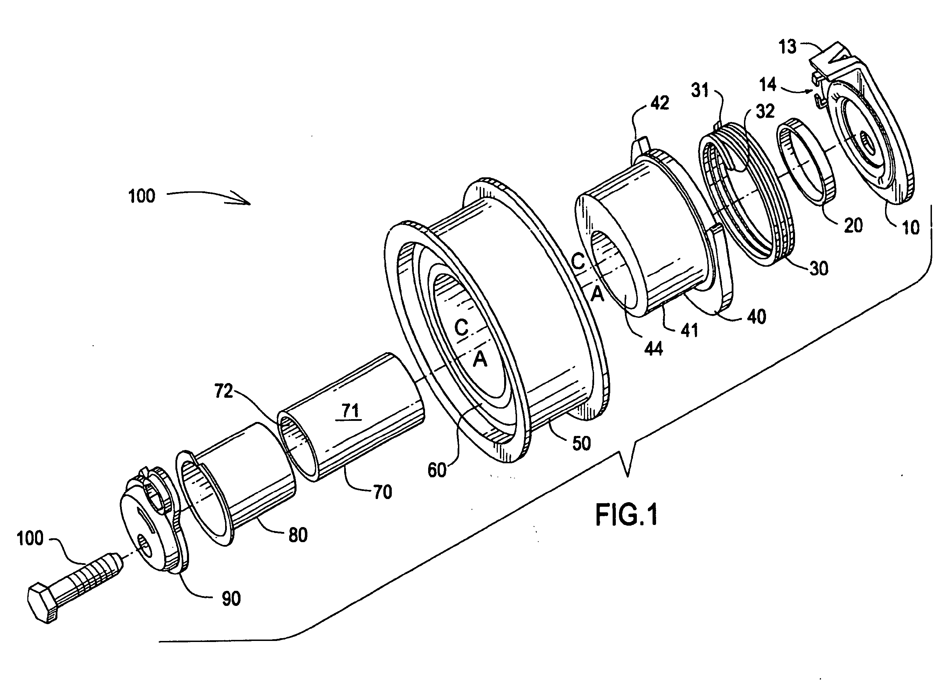

Fig. 1 is an exploded view of a tensioner and installation assembly. Tensioner 100 comprises a base 10 which is fixedly connected to an end of shaft 70. Base 10 also comprises stop 13 and spring retaining portion 14. Engaged about shaft 70 is pivot arm 40. Pivot arm 40 comprises portion 42 which engages stop 13 on base 10, thereby limiting the travel range of pivot arm 40.

Torsion spring 30 is engaged between pivot arm 40 and base 10. Spring end 31 engages spring retaining portion 14 on base 10. spring end 32 engages pivot arm 40.

Torsion spring 30 biases pivot arm 40 by applying a spring force (torque) to pivot arm 40 and thereby to the pulley 50 and thereby to a belt (not shown). The belt may be of the sort used on a vehicle engine valve timing system of front end accessory drive, each known in the art.

Bearing 60 is mounted on pivot arm surface 41 and is disposed between pulley 50 and pivot arm 40. Pulley 50 rotates about bearing 60 during operation. Bushing 80 is disposed between an outer surface 71 of shaft 70 and an inner bore surface 44 of pivot arm 40. Bushing 80 acts as a low friction bearing to allow movement of pivot arm 40 about shaft 70. Pivot arm 40 also bears upon bushing 20. Bushing 20 acts as a low friction bearing to allow movement of pivot arm 40 about shaft 70.

Retaining member 90 is fixedly connected to an end of shaft 70 opposite base 10. Retaining member 90, shaft 70 and base 10 comprise an installation assembly 200. Installation assembly 200 also holds together all of the tensioner components, thereby negating the need for a separate fastener for this purpose.

Shaft 70 further comprises a bore 72 thereby allowing a fastener 110 to pass therethrough. Fastener 110 is used to attach the tensioner to a mounting surface (not shown). Fastener 110 may comprise a threaded bolt or stud or other suitable fastener known in the art.

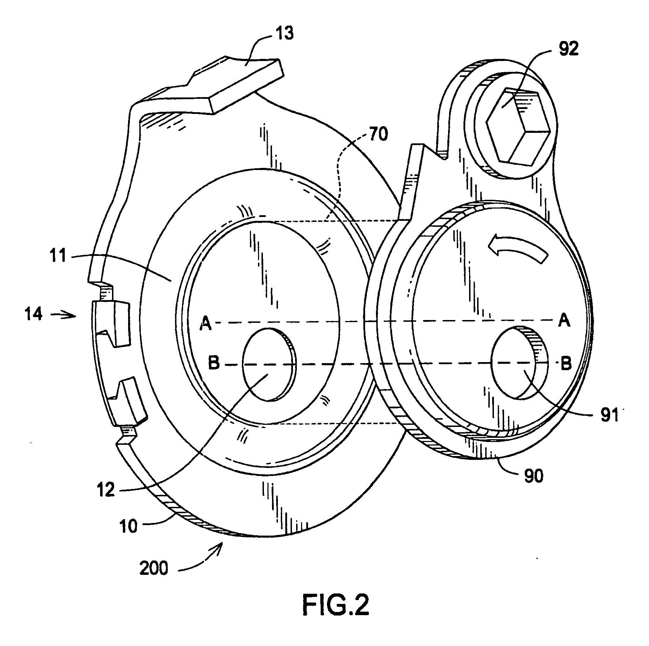

Fig. 2 is a detail of the installation assembly. Shaft 70 is fixedly engaged to base 10 by a press fit, or spot welding or adhesive. Rim 11 locates and retains shaft 70 on base 10. Retaining member 90 is fixedly engaged to shaft 70 opposite the base 10.

A hole 12 in base 10, in conjunction with a fastener 110, locates the tensioner on a mounting surface, for example, on an engine. The axis B-B for hole 12 is eccentrically located from the centerline of shaft 70 and the pivot arm center of rotation, namely, axis (A-A). Hole 91 in retaining member 90 also aligns with hole 12 in base 10 along axis B-B. Holes 91 and 12 align with axis B-B. The center of rotation (C-C) of pulley 50 is eccentrically offset from axis A-A.

Fastener 110 engages hole 91, hole 12 and through bore 72 to attach tensioner 100 to a mounting surface (not shown). Bore 72 may be of a large diameter giving shaft 70 the form of a tube and aligned with axis A-A. Bore 72 may also be a drilled bore of a diameter suitable for receiving the fastener aligned with axis B-B and disposed substantially between hole 12 and hole 91.

Tool receiver 92 allows a tool, such as a ratchet, to be attached to the installation member during installation of the tensioner 100.

The installation assembly comprises a rigid assembly such that the entire installation assembly 200 rotates as a unit during installation, namely, when a tool is engaged at tool receiver 92 and a torque is applied.

During installation of the tensioner 100 a tool is inserted into tool receiver 92. The installation assembly 200 is rotated about a fastener inserted into holes 91, 12. Since the center of rotation of the pivot arm, namely, axis (A-A), is eccentrically offset from the center of rotation of the installation assembly (axis B-B) a belt load vector imparted to a belt can be applied and adjusted. Once the proper adjustment is achieved, fastener 110 is torqued down thereby securing the tensioner.

Although a form of the invention has been described herein, it will be obvious to those skilled in the art that variations may be made in the construction and relation of parts without departing from the scope of the invention described herein.

## Claims

1. A tensioner comprising:
a base (10) having a shaft (70) fixedly connected thereto;
the shaft having a bore (72);
a pivot arm (40) pivotally engaged with the shaft and having a pivot axis (A-A);
a pulley (50) journalled to the pivot arm and having a center of rotation about an axis (C-C);
a spring (30) engaged between the base and the pivot arm;
a retaining member (90) fixedly engaged with the shaft opposite the base, the pivot arm and spring disposed between the retaining member and the base;
a first hole (12) in the base and a second hole (91) in the retaining member aligned with an axis (B-B), the first hole and second hole and bore cooperatively engaging a fastener (110);
the second hole (91) axis (B-B) offset a predetermined distance from the pivot axis (A-A);
the pullex (50) axis (C-C) offset a predetermined distance from the pivot axis (A-A);
a tool receiver (92) in the retaining member; and **characterised in that** the base, shaft and retaining member are fixedly connected together to form a rigid installation assembly (200) such that the entire installation assembly (200) rotates as a unit during installation and there is no relative movement between the base, shaft and retaining member during installation.

2. The tensioner as in claim further comprising:
a low friction bearing (80) disposed between the hollow shaft and the pivot arm.

3. The tensioner as in claim 1 further comprising:
a stop (13) in the base for limiting a travel range of the pivot arm.

4. The tensioner as in claim 3 further comprising:
a portion (42) for engaging the stop.

## Patentansprüche

1. Spannvorrichtung mit:
einer Basis (10) mit einem fest an dieser befestigten Schaft (70);
wobei der Schaft eine Bohrung (72) aufweist;
einem Schwenkarm (40), der schwenkbar mit dem Schaft zusammengreift und eine Schwenkachse (A-A) hat;
einer Riemenscheibe (50), die an dem Schwenkarm gelagert ist und eine Drehmitte bezüglich einer Drehung um eine Achse (C-C) hat;
einer zwischen der Basis und dem Schwenkarm eingreifenden Feder (30);
einem Rückhalteteil (90), das gegenüber der Basis fest mit dem Schaft zusammengreift, wobei der Schwenkarm und die Feder zwischen dem Rückhalteteil und der Basis angeordnet sind;
einer in der Basis ausgebildeten ersten Öffnung (12) und einer in dem Rückhalteteil ausgebildeten zweiten Öffnung (91), die mit einer Achse (B-B) ausgerichtet sind, wobei die erste und die zweite Öffnung und die Bohrung in zusammenwirkendem Eingriff mit einem Befestigungsteil (110) stehen;
wobei die Achse (B-B) der zweiten Öffnung (91) um einen vorbestimmten Abstand gegenüber der Schwenkachse (A-A) versetzt ist;
wobei die Achse (C-C) der Riemenscheibe (50) um einen vorbestimmten Anstand gegenüber der Schwenkachse (A-A) versetzt ist;
einem in dem Rückhalteteil vorgesehenen Werkzeugaufnahmeteil (92); und **dadurch gekennzeichnet, dass** die Basis, der Schaft und das Rückhalteteil fest miteinander verbunden sind, um eine starre Installationsvorrichtung (200) derart zu bilden, dass sich während der Installation die gesamte Installationsvorrichtung (200) als Einheit dreht und während der Installation keine Relativbewegung zwischen der Basis, dem Schaft und dem Rückhalteteil erfolgt.

2. Spannvorrichtung nach Anspruch 1, ferner mit:
einem reibungsarmen Lager (80), das zwischen dem hohlen Schaft und dem Schwenkarm angeordnet ist.

3. Spannvorrichtung nach Anspruch 1, ferner mit:
einem an der Basis angeordneten Anschlag (13) zum Begrenzen des Bewegungsbereichs des Schwenkarms.

4. Spannvorrichtung nach Anspruch 3, ferner mit:
einem Teil (42) zum Zusammengreifen mit dem Anschlag.

## Revendications

1. Tendeur comprenant :
une base (10) comportant un arbre (70) qui lui est relié fixement ;
l'arbre ayant un alésage (72) ;
un bras pivotant (40) engagé de façon pivotante avec l'arbre et ayant un axe de pivotement (A-A) ;
une poulie (50) tourillonnée sur le bras pivotant et ayant un centre de rotation autour d'un axe (C-C) ;
un ressort (30) engagé entre la base et le bras pivotant ;
un élément de retenue (90) engagé fixement avec l'arbre, opposé à la base, le bras pivotant et le ressort disposés entre l'élément de retenue et la base ;
un premier trou (12) dans la base et un deuxième trou (91) dans l'élément de retenue alignés avec un axe (B-B), le premier trou et le deuxième trou et l'alésage engageant, en coopération, une attache (110) ;
l'axe (B-B) de deuxième trou (91) décalé d'une distance prédéterminée de l'axe de pivotement (A-A) ;
l'axe (C-C) de poulie décalé d'une distance prédéterminée de l'axe de pivotement (A-A) ;
un récepteur d'outils (92) dans l'élément de retenue, et **caractérisé en ce que** la base, l'arbre et l'élément de retenue sont reliés fixement les uns aux autres pour former un ensemble d'installation rigide (200) de manière que la totalité de l'ensemble d'installation (200) tourne en une unité durant l'installation et qu'il n'y ait pas de mouvement relatif entre la base, l'arbre et l'élément de retenue durant l'installation.

2. Tendeur selon la revendication 1, comprenant, en outre :
un palier à faible friction (80) disposé entre l'arbre creux et le bras pivotant.

3. Tendeur selon la revendication 1, comprenant, en outre :
une butée (13) dans la base pour limiter une plage de déplacement du bras pivotant.

4. Tendeur selon la revendication 3, comprenant, en outre :
une partie (42) pour engager la butée.
